# FASCICULE DE BREVET EUROPEEN

(11) **EP 1 877 751 B1**
(45) Date de publication et mention de la délivrance du brevet: **29.02.2012**
(21) Numéro de dépôt: 06755543.3
(22) Date de dépôt: 28.04.2006
(51) Int. Cl.: G01N 1/22

(54) **DISPOSITIF ET PROCÉDÉ DE PRÉLÈVEMENT ET DE TRANSPORT**
VERFAHREN UND VORRICHTUNG FÜR ENTNAHME UND TRANSPORT
METHOD AND DEVICE FOR REMOVAL AND TRANSPORT

(30) Priorité: 03.05.2005 FR 0551161
(43) Date de publication de la demande: 16.01.2008
(73) Titulaire: Commissariat à l'Énergie Atomique et aux Énergies Alternatives, 75015 Paris (FR)
(72) Inventeur: TOVENA-PECAULT, Isabelle, F-33850 Leognan (FR); MANAC'H, Patrick, F-33770 Salles (FR); PALMIER, Stéphanie, F-33000 Bordeaux (FR)
(74) Mandataire: Poulin, Gérard
(86) Numéro de dépôt international: PCT/FR2006/050400
(87) Numéro de publication internationale: WO 2006/117494

(56) Documents cités:
- WO-A-96/09527
- US-A- 3 897 688
- US-A- 5 554 537
- US-A- 5 965 453

## Description

### DOMAINE TECHNIQUE

L'invention se situe dans le domaine de la mesure, et plus spécifiquement de l'échantillonnage avant analyse.

En particulier, l'invention est relative à un dispositif qui permet la collecte de contaminants particulaires, moléculaires et biologiques, notamment dans des environnements clos, et qui permet également de confiner l'échantillon et de le transporter, afin d'obtenir une analyse représentative des différentes sources de pollution présentes initialement dans l'environnement contrôlé.

L'invention se rapporte également à un procédé de collecte surfacique d'aérosols présents dans un espace clos.

### ÉTAT DE LA TECHNIQUE ANTÉRIEURE

Les contaminants particulaires, également appelés aérosols, sont des particules solides en suspension dans une atmosphère gazeuse (air ou autres gaz). Ils peuvent être caractérisés par leur nature, par leur distribution en taille (quelques fractions de nanomètres à quelques centaines de microns) et leur concentration par unité de volume.

Dans le cas d'environnements industriels clos, le niveau de contamination ou d'empoussièrement volumique est spécifié suivant des classes de propreté, référencées dans la norme ISO 14644-1 ; dans le cas des contaminants biologiques, la norme ISO 14698 est utilisée. Des méthodes de mesure sont nécessaires pour comparer et classer le milieu concerné, la standardisation de ces procédés n'étant cependant que relative.

Généralement, les informations concernant le niveau de contamination et d'empoussièrement des salles propres et des environnements clos maîtrisés apparentés sont obtenues au moyen de compteurs de particules ou de compteurs à noyaux de condensation Toutefois, l'utilisation de tels équipements ne renseigne que sur la contamination volumique de l'enceinte et ne permet pas de déterminer l'origine et le comportement des particules ; des caractérisations morphologiques et chimiques s'avèrent également nécessaires pour évaluer la propreté.

Par exemple, un compteur optique de particules permet d'obtenir le nombre de particules dans un certain volume gazeux prélevé : ces particules génèrent une diffusion et/ou une absorption de la lumière, qui peuvent ensuite être reliées à la taille des particules. Toutefois, cette démarche est basée habituellement sur l'assimilation de la forme des particules à une sphère, et ne tient pas compte du comportement optique des particules occasionné par leur nature physico-chimique, par exemple l'absorption de la lumière en raison de leur composition.

Par ailleurs, des systèmes de pompage dynamique permettent d'effectuer des mesures des contaminants présents dans l'environnement. Ces mesures se réfèrent cependant au volume prélevé, en général de façon centrale, issu d'un environnement perturbé en termes de propreté et d'aéraulique par la simple présence du pompage et du flux créé.

Or, dans de nombreux procédés, c'est de fait le comportement des contaminants aérosols en surface des produits fabriqués qui est prépondérant : l'objectif est d'obtenir un matériau de composition, en particulier surfacique, la plus propre possible. Des informations précises quant à l'interaction entre la surface d'un produit et les particules aérosols sont ainsi souhaitables.

Le document WO96/09527 concerne la collecte de contaminants aérosols par adhésion sur un substrat d'échantillonnage dans l'environnement d'un utilisateur, et en particulier, sans confinement, ni substrat de prélèvement mobile entre deux positions.

Le document US3897688 concerne le prélèvement par apposition d'un contaminant présent sur une surface, et non d'un aérosol; le dispositif de prélèvement est adapté pour distribuer différents disques de prélèvements surfaciques l'un après l'autre, sans confinement de ces disques une fois le prélèvement effectué.

Le document US2209614 ne définit non plus la prise d'échantillonnage de poussière dans les salles propres, et est clairement composé d'un grand nombre d'éléments et matériaux non aptes a l'application de cette norme ISO.

Il existe donc un besoin d'optimiser le prélèvement des contaminants dans une enceinte close, et de permettre leur analyse sans les altérer.

### EXPOSÉ DE L'INVENTION

L'invention a pour principal objet de pallier les inconvénients des dispositifs de prélèvement existants.

L'invention, sous l'un de ses aspects, concerne un dispositif de prélèvement, qui peut être adapté à une multitude d'enceintes, permettant de récupérer des contaminants et/ou polluants particulaires présents dans l'atmosphère environnante. Le prélèvement est effectué de façon surfacique, par sédimentation sur des substrats définis, afin de coller au mieux au comportement réel des particules.

Avantageusement, le dispositif de prélèvement des contaminants est compatible avec les environnements à tester en termes de propreté ; en particulier, lorsque les environnements respectent des taux d'empoussièrement tels que définis dans la norme ISO 14644-1, le dispositif n'apporte aucune pollution particulaire susceptible d'enfreindre le seuil initial ou requis. Il permet d'obtenir un état de pollution surfacique des matériaux grâce à une collecte (locale) des divers contaminants par sédimentation sur des substrats adaptés, les contaminants n'étant pas encore déposés sur une surface au moment du prélèvement. Par l'analyse des échantillons (substrat et/ou contaminant collecté), il sera possible de caractériser les contaminants et d'en identifier la source et la nocivité ; le dispositif sous un mode de réalisation préféré permet en outre de confiner le substrat et l'échantillon prélevé jusqu'au lieu de l'analyse afin de conserver l'intégrité du prélèvement.

Un dispositif particulièrement adapté comprend ainsi un support muni de moyens de mise en place de substrats d'échantillonnage coulissant dans et hors d'une enveloppe. Avantageusement, le coulissement n'engendre aucun débris contaminant grâce au choix de matériaux faiblement générateurs de particules, par exemple du fait de leur coefficient de friction ; ils peuvent ainsi être tous les deux en téflon^{™}. Le coulissement est de préférence assisté par la connexion, amovible ou non, du support avec une tige de manipulation et une poignée de préhension.

L'ensemble support et enveloppe peut être intégré à un corps, par exemple métallique, solidaire de l'enveloppe et permettant le mouvement relatif du support. De préférence, le boîtier, ou corps, est fabriqué de façon à définir un intérieur étanche ou hermétique, par la présence de joints et/ou éléments formant couvercle. Avantageusement, le corps est muni à l'extrémité de passage du support d'un embout standardisé permettant une connexion étanche avec un autre embout.

La conception du dispositif permet ainsi une très bonne isolation vis-à-vis de l'atmosphère extérieure de l'environnement à contrôler, ainsi qu'un confinement étanche après déconnexion du dispositif.

Le support peut être de section rectangulaire ou carrée, et comprendre un logement débouchant sur une paroi latérale en tant que moyens de mise en place. Le support peut de préférence être muni d'encoches, horizontales et/ou verticales, et/ou obliques, par rapport au fond de la cavité de façon à pouvoir y positionner des substrats standardisés, par exemple des plaques de dimensions 1 x 1 cm (± 10 %).

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1 représente un dispositif selon un mode préféré de réalisation de l'invention en position de prélèvement.
La figure 2 illustre le dispositif de la figure 1 en coupe et en position de confinement.

### EXPOSÉ DÉTAILLÉ DE MODES DE RÉALISATION PARTICULIERS

Le dispositif de prélèvement selon l'invention assure une collecte des contaminants particulaires par sédimentation dans un milieu fermé, permettant l'analyse par une mesure statique de la contamination déposée.

Les contaminants sont collectés sur des substrats d'échantillonnage, insérés dans le milieu à analyser, puis confinés dans le dispositif de prélèvement. De fait, le résultat est représentatif du dépôt sur les surfaces sensibles concernées mais il ne provient pas d'un prélèvement par transfert depuis une surface où il aurait été préalablement déposé. En particulier, l'absence de tout pompage dynamique évite de perturber la mesure, aux niveaux propreté et aéraulique notamment.

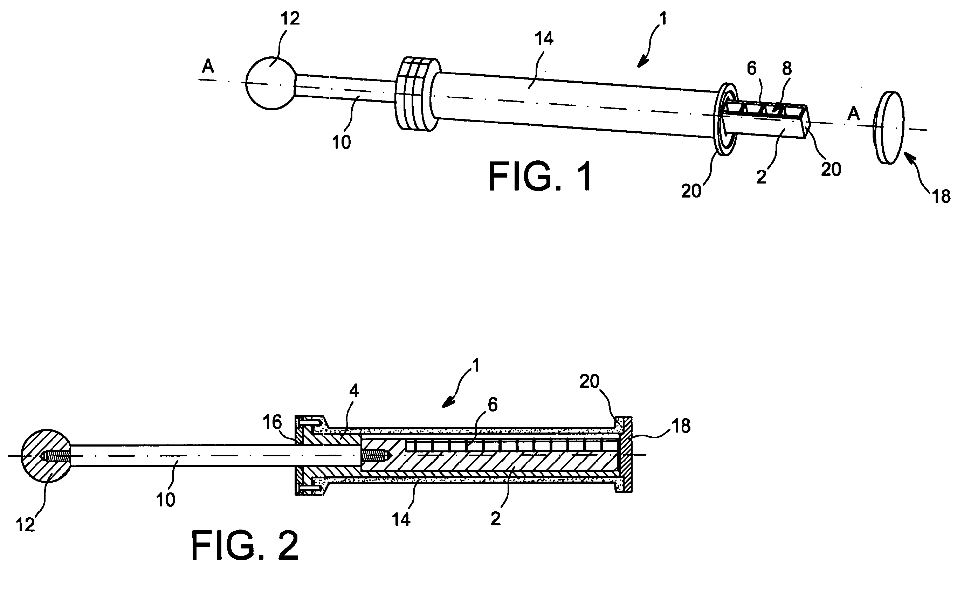

Tel qu'illustré sur les figures 1 et 2, un dispositif 1 de prélèvement et de confinement selon un mode de réalisation préféré de l'invention comprend un support de prélèvement 2 qui peut coulisser dans et hors d'une enveloppe 4. Le support 2 est longitudinal, s'étendant le long de l'axe AA de coulissement ; avantageusement, le support 2 est de section radiale quadrilatérale, de préférence rectangulaire ou carrée. L'enveloppe 4 est de taille et forme adaptées au support 2 : le support 2 peut prendre une position de confinement dans laquelle il est à l'intérieur de l'enveloppe 4 ; le support 2 peut coulisser vers une position de prélèvement dans laquelle il est partiellement à l'extérieur de son enveloppe 4. Avantageusement, le coulissement est effectué sans friction générant des particules entre le support 2 et l'enveloppe 4 : leurs matériaux sont choisis de façon adaptée, avec un faible coefficient de friction notamment ; de préférence la surface en contact entre support 2 et enveloppe 4 est de même composition. De fait, il est préférable que le nombre de débris générés par le coulissement soit minimal, et surtout que leur nature éventuelle soit le moins gênant possible vis-à-vis des échantillons prélevés, afin de pouvoir rapidement les distinguer et les éliminer lors de l'analyse. En particulier, il est souhaitable que, lorsqu'ils respectent un seuil en matière de propreté, par exemple un critère de taux d'empoussièrement tel que défini dans les normes comme la norme ISO 14644-1, les environnements depuis lesquels le prélèvement est effectué ne soient pas pollués par des particules qui les feraient dépasser ce seuil. De façon préférée, enveloppe 4 et support 2 sont en téflon^{™}, en particulier pour des prélèvements de contaminants de type métallique.

Le support de prélèvement 2 permet de positionner des substrats 6 d'échantillonnage. Avantageusement, de tels substrats 6 sont amovibles en vue des analyses à effectuer ; classiquement, il s'agit de plaques carrées de côté de l'ordre de 1 cm (0,9 à 1,1 cm) et d'épaisseur de l'ordre du millimètre, de nature minérale, organique ou cellulaire (collecte de biofilms selon la norme ISO 14698 par exemple). Les substrats d'échantillonnage 6 sont choisis en fonction des éléments à prélever et en fonction du traitement de surface associé, ainsi qu'en fonction du type de caractérisation souhaitée. Pour la détermination de la taille et de la nature des contaminants, les substrats d'échantillonnage 6 peuvent par exemple être des adhésifs carbonés ; pour la caractérisation des interfaces entre un matériau sensible déterminé, comme une surface de silicium, et des contaminants en terme d'adhésion, les substrats 6 peuvent être constitués de ce matériau déterminé et du traitement de surface associé éventuel.

Avantageusement, le support de prélèvement 2 est muni de moyens 8 permettant de mettre en place plusieurs substrats 6, de natures identiques ou différentes, sur le même support 2 et donc de réaliser plusieurs mesures simultanément. Sous un mode de réalisation préférée, les moyens pour positionner le substrat comprennent au moins un logement usiné 8 dans le support 2, par exemple sur une paroi du support 2, de section rectangulaire, carrée, ou circulaire, s'étendant le long de l'axe de coulissement AA : le substrat 6 peut être positionné dans le logement 8, verticalement ou horizontalement par exemple. Avantageusement, le logement 8 est muni d'encoches prévues à cet effet : de préférence par paires, des encoches sur les parois latérales des logements 8 résultant de l'usinage dans la masse du support 2, garantissent le maintien dans sa position d'un substrat 6, par exemple en position oblique ou perpendiculaire par rapport à l'axe AA au sein du logement 8, en particulier lors de la mise en position de prélèvement dans l'enceinte à contrôler. Différentes configurations des moyens de positionnement et/ou de position de substrats 6 peuvent être combinées sur un même support 2.

L'enveloppe 4 peut être sous forme tubulaire, c'est-à-dire avec une cavité dans laquelle est entièrement localisé le support 2 dans sa position rétractée. L'enveloppe 4 peut également comprendre une cavité débouchant latéralement vers le logement 8 de positionnement des substrats 6. L'extrémité distale du support 2 est pleine et adaptée à l'ouverture distale de l'enveloppe 4, de façon à, lorsque le support 2 se rétracte dans son enveloppe 4, obturer cette dernière : par exemple, l'enveloppe 4 est munie d'un trou de section carrée adapté à la section du support 2 et possédant un évasement à son extrémité distale, évasement dans lequel vient se loger l'extrémité distale complémentaire du support 2.

L'autre extrémité du support 2 peut être solidarisée, de préférence de façon amovible, par exemple par une liaison de type vissage, à une tige de manipulation 10 reliée à une poignée de préhension 12, facilitant ainsi les manoeuvres de coulissement du support 2 par rapport à son enveloppe 4. L'extrémité proximale de l'enveloppe 2 est dans ce cas dotée d'une ouverture de diamètre supérieur à celui de la tige 10, permettant un coulissement aisé.

Afin d'optimiser les analyses, il est souhaitable que le prélèvement soit effectué en influant le moins possible sur l'environnement concerné. Pour les espaces clos, de type boîte à gants ou intérieur d'un appareillage de fabrication, munis classiquement de moyens de communication vers l'extérieur, des moyens sont prévus sur le dispositif de prélèvement 1 afin de le connecter de façon hermétique.

Le dispositif 1 comprend ainsi un boîtier, ou corps, 14 longitudinal contenant l'enveloppe 4, avantageusement solidarisé à elle. Le corps creux 14, de préférence cylindrique, sert également à manipuler l'enveloppe 4 et le support 2 grâce à une constitution plus robuste : avantageusement, le boîtier 14 est en métal, par exemple en acier inoxydable.

Le corps 14 est adapté pour que le support 2 de prélèvement puisse coulisser vers l'extérieur. La partie d'extrémité proximale du boîtier 14 peut donc être munie d'une ouverture permettant le passage de la tige 10 de manipulation. Avantageusement, cette ouverture est munie d'un joint 16, qui peut par exemple être torique et/ou écrasé par un système « presse étoupe ». Dans ce cas, il est possible que l'ouverture proximale de l'enveloppe 4 soit de dimensions très supérieures à la tige 10, et de ne pas y mettre de joint : le confinement étanche des substrats 16. peut être assuré par le corps creux 14. Ce mode de réalisation permet de réduire les frictions entre tige 10 et enveloppe 4, et les débris éventuellement générés.

A son extrémité distale, possédant une ouverture pour le passage du support 2, le corps 14 est de préférence associé à un couvercle amovible, par exemple une tape 18 : une fois l'échantillon prélevé et le support 2 dans sa position de confinement, il est possible d'obturer l'extrémité du boîtier 14 par vissage ou emboîtement de la tape 18 afin de transporter le dispositif 1. Un tel couvercle peut également être prévu pour l'extrémité distale du corps si la poignée 12 et la tige de manipulation 10 sont amovibles et retirées pour transporter l'échantillon, afin de gagner en encombrement, et par exemple, de réutiliser la poignée 10, 12 sur un autre dispositif.

Pour assurer une connexion étanche entre l'environnement confiné à analyser et le dispositif de prélèvement 1, l'extrémité distale du corps 14 est avantageusement munie d'un embout 20 par lequel il se fixe sur les moyens de communication de l'enceinte à tester. De préférence, l'embout 20 forme l'extrémité distale du corps 14, et est sous la forme d'une interface standardisée ; par exemple, l'extrémité du corps 14 est un embout 20 de type DN40, issu de la technologie du vide : un tel embout, similaire à un joint écrasé, peut être connecté de façon standardisée et compatible avec le vide sur des moyens de communication adaptés.

Il est ainsi possible de connecter le dispositif 1 selon l'invention selon une procédure standardisée à un espace clos muni de l'embout correspondant et dans lequel le prélèvement doit être effectué : l'étanchéité du système constitué du dispositif 1 et de l'enceinte close est alors assurée, sans perturbation de l'atmosphère interne. Le support 2 est ensuite introduit par coulissement dans l'enceinte et hors de l'ensemble corps 14 / enveloppe 4 afin d'effectuer le prélèvement sur les substrats 6 et de collecter des aérosols, sans altérer l'environnement grâce au choix de matériaux ne générant que peu de débris lors du coulissement de l'un par rapport à l'autre. A la fin du prélèvement, le support 2 muni des substrats 6 sur lesquels les échantillons de particules sont sédimentés, est réintégré par coulissement dans l'enveloppe 4 ; une étanchéité au moins partielle est obtenue lors de la déconnexion de l'embout 20 d'avec les moyens de communication grâce à la correspondance entre les extrémités distales du support 2 et de l'enveloppe 4. Si ceci est souhaité, l'étanchéité peut ensuite être optimisée par mise en place de la tape 18 : une fois les échantillons prélevés, il est ainsi possible de les maintenir à l'abri des contaminations externes jusqu'à l'analyse, qui peut donc être éloignée du prélèvement, tant en localisation qu'en durée, sans altérer les résultats.

Avantageusement, le dispositif 1 selon l'invention peut être entièrement démonté : en particulier, le support de prélèvement 2 peut être complètement dissocié de son enveloppe 4, elle-même amovible par rapport au corps externe 14. Ce mode de réalisation permet de nettoyer l'ensemble du dispositif 1 si nécessaire, et ce de façon approfondie et adaptée à chacun des matériaux constituant les différents éléments. La compatibilité du dispositif 1 avec les classes de propreté les plus exigeantes (dès la classe ISO 4) peut ainsi être assurée.

Par ailleurs, ce démontage permet étalement d'utiliser une même poignée 10, 12, un même boîtier 14, voire une même enveloppe 4, pour des supports de prélèvement 2 interchangeables et choisis en fonction de l'utilisation désirée et des substrats 6 considérés.

Les différents éléments du dispositif 1 selon l'invention peuvent être fabriqués en différents matériaux appropriés ; avantageusement, les matériaux sont neutres vis-à-vis des environnements dans lesquels le dispositif 1 peut être localisé et ne modifient pas le taux d'empoussièrement, notamment lorsqu'il suit une norme, de l'environnement concerné. De préférence, les surfaces internes du dispositif 1, et notamment des logements 8, ont des propriétés d'adsorption physicochimiques minimales afin d'assurer une collecte sélective des contaminants sur les substrats d'échantillonnage 6 et non sur le support 2 lui-même.

Le dispositif 1 selon l'invention regroupe donc trois outils en un puisque c'est à la fois un outil de prélèvement de contaminants, un outil de confinement et un outil de transport d'échantillons : une fois prélevés, les échantillons peuvent être stockés sur le substrat 6 et dans l'enveloppe 4 pour leur transport, le dispositif 1 ne nécessitant aucun équipement de manutention ou de conditionnement complémentaire. Les substrats d'échantillonnage 6 comprenant sur leur surface les échantillons prélevés peuvent être analysés immédiatement, ou après un transport plus ou moins long vers différents appareillages de mesure.

Les substrats 6, solidaires du support 2 et confinés dans le corps 14 du dispositif 1 peuvent être extraits sur le lieu de l'analyse par coulissement vers l'extérieur de l'enveloppe 4, selon une procédure similaire au prélèvement. En particulier, les échantillons peuvent donc être caractérisés par toute méthode physicochimique adaptée (microscopie électronique à balayage, éventuellement associée à une sonde à rayons X MEB-EDS ; spectroscopie infrarouge, éventuellement par transformée de Fourier FTIR ;...) afin de déterminer les différentes caractéristiques d'intérêt (nature, quantité des contaminants,...), sans contrainte relative au lieu du prélèvement.

Il est considéré que, pour obtenir des résultats fiables, des substrats 6 de surface de l'ordre du cm², voire plus, sont souhaitables, pour une durée d'exposition raisonnable. Pour obtenir un nombre adéquat d'échantillons simultanés, en particulier douze, un mode de réalisation préféré comprend un corps en inox cylindrique de révolution de diamètre compris entre 40 et 50 mm, par exemple 45 mm, pour une longueur de 300 à 350 mm hors tout (c'est-à-dire en comptant les parties d'extrémité), par exemple 320 mm. Ce mode de réalisation permet d'avoir un encombrement maximal (extrémité distale du dispositif 1 jusqu'à la poignée 12) inférieur à 550 mm qui permet d'effectuer les prélèvements sur toutes les enceintes closes, autour desquelles un espace d'un mètre est courant. En outre, du fait de sa relative légèreté (moins de 35 kg), de sa maniabilité et de sa robustesse (rigidité, résistance aux chocs), le dispositif 1 est aisément utilisable et transportable sans risque de dégradation des échantillons. Par ailleurs, n'ayant pas besoin d'énergie ou de fluides (gaz ou liquides) pour fonctionner, il peut être utilisé dans des lieux très isolés.

Le dispositif selon l'invention peut être utilisé dans tous les domaines de la science et de l'industrie dans lesquels les aérosols peuvent avoir une influence. En particulier, il est possible d'appliquer le dispositif selon l'invention aux salles et environnements à taux d'empoussièrement contrôlé, par exemple selon la norme ISO 14644-7, comme les salles propres et les enceintes séparatives apparentées (poste à air propre, boîte à gants, isolateurs et « mini-environnements »). Les domaines concernés comportent en particulier l'optique, le laser, l'aérospatial, l'électronique, les circuits intégrés, l'agroalimentaire, la pharmacie, la nanotechnologie, en particulier des poudres, le milieu médical et hospitalier, ...

Compatible en termes de contamination avec l'enceinte à tester, le dispositif de prélèvement selon l'invention en lui-même n'engendre pas de rupture de la chaîne de propreté à l'intérieur de l'environnement clos, pas plus qu'à l'intérieur du dispositif proprement dit. Grâce au choix des matériaux, à la conception et à l'assemblage de l'ensemble, le risque de pollution intrinsèque du dispositif est quasi-nul par rapport à l'environnement et aux échantillons (minimisation d'un bruit de fond potentiel) : la génération de polluants particulaires et moléculaires (par désorption par exemple) est minime.

## Revendications

1. Dispositif de prélèvement (1) et de collecte de contaminants particulaires aérosol comprenant un support de prélèvement (2) muni de moyens (8) pour positionner au moins un substrat d'échantillonnage (6) et une enveloppe longitudinale (4) dans laquelle le support de prélèvement (2) est susceptible de coulisser le long de l'axe (AA) du dispositif (1) entre une première position de prélèvement dans laquelle les moyens de positionnement (8) sont localisés à l'extérieur de l'enveloppe (4), et une deuxième position de confinement dans laquelle le support (2) est localisé à l'intérieur de l'enveloppe (4) et dans laquelle le dispositif (1) est étanche autour des moyens (8) de positionnement du substrat (6), **characterisé en ce que** le support (2) et l'enveloppe (4) sont composés de matériaux qui génèrent peu de débris lors de leur coulissement l'un par rapport à l'autre, de sorte que les taux d'empoussièrement, tel que définis dans la norme ISO 14644-1, de l'environnement externe à partir duquel le prélèvement est effectué n'est pas modifié par une pollution particulaire issue du coulissement, le dispositif comprenant un corps (14) solidarisé autour de l'enveloppe (4), l'extrémité distale du corps (14) étant munie d'une ouverture permettant le passage du support (2), comprenant en outre une tape (18) susceptible d'obturer de façon étanche l'ouverture distale du corps (14).

2. Dispositif selon la revendication 1 dans lequel les support (2) et enveloppe (4) sont en téflon^{™}.

3. Dispositif selon l'une des revendications 1 à 2 dans lequel le support (2) est à section radiale rectangulaire.

4. Dispositif selon l'une des revendications 1 à 3 dans lequel les moyens de positionnement comprennent au moins un logement usiné (8) dans le support (2), s'étendant le long de l'axe (AA).

5. Dispositif selon la revendication 4 dans lequel les moyens de positionnement comprennent au moins une encoche sur une paroi interne du logement usiné (8).

6. Dispositif selon la revendication 5 dans lequel chaque encoche est doublée en paires usinées dans la masse du support (2) de façon à permettre d'insérer dans la paire d'encoches un substrat (6) faisant un angle par rapport à l'axe (AA) du dispositif (1), en particulier égal à 90° ou 180°.

7. Dispositif selon la revendication 6 dans lequel le logement (8) est à section radiale carrée de côté compris entre 0,9 et 1,1 cm, et les paires d'encoches sont perpendiculaires à l'axe (AA).

8. Dispositif selon la revendication 7 l'ouverture distale du corps (14) comprend des moyens de connexion étanche (20).

9. Dispositif selon la revendication 8 dans lequel les moyens de connexion (20) sont un embout de type DN40.

10. Dispositif selon l'une des revendications précédentes dans lequel l'extrémité proximale du corps (14) comprend des moyens (16) pour que le corps (14) forme une enceinte étanche autour des moyens de positionnement (8).

11. Dispositif selon la revendication 10 comprenant un joint torique (16) à l'extrémité proximale du corps (14) susceptible de laisser coulisser de façon étanche une tige (10) à travers lui.

12. Dispositif selon l'une des revendications précédentes dans lequel le corps (14) est en métal, par exemple en acier inoxydable.

13. Dispositif selon l'une des revendications 1 à 12 dans lequel l'extrémité proximale du support (2) comprend une partie filetée, et l'extrémité proximale de l'enveloppe (4) comprend une ouverture face à la partie filetée.

14. Dispositif selon la revendication 13 comprenant en outre des moyens (10, 12) susceptibles d'être vissés à la partie filetée du support (2) pour assister son coulissement.

## Claims

1. A device (1) for sampling and collecting aerosols particles contaminants particles comprising a sampling support (2) provided with means (8) for positioning at least one sampling substrate (6) and a longitudinal envelope (4) in which the sampling support (2) is able to slide along the axis (AA) of the device (1) between a first sampling position in which the positioning means (8) are localized outside the envelope (4), and a second confinement position in which the support (2) is localized inside the envelope (4) and in which the device (1) is sealed around means (8) for positioning the substrate (6), **characterized in that** the support (2) and the envelope (4) consist of materials which generate little debris upon their sliding relatively to each other, so that the dust level, as defined in the ISO 14644-1 standard, of the external environment from which the sampling is carried out is not changed by particle pollution from sliding, the device comprising a body (14) firmly attached around the envelope (4), the distal end of the body (14) being provided with an aperture for the passage of the support (2), further comprising a plug (18) capable of sealably blocking the distal aperture of the body (14).

2. The device according to claim 1 wherein the support (2) and envelope (4) are in Teflon^{™}.

3. The device according to any of claims 1 to 2 wherein the support (2) has a rectangular radial section.

4. The device according to any of claims 1 to 3 wherein the positioning means comprise at least one machined housing (8) in the support (2), extending along the axis (AA).

5. The device according to claim 4 wherein the positioning means comprise at least one notch on an internal wall of the machined housing (8).

6. The device according to claim 5 wherein each notch is doubled in machined pairs in the bulk of the support (2) so as to allow insertion into the pair of notches, of a substrate (6) forming an angle relatively to the axis (AA) of the device (1), in particular equal to 90° or 180°.

7. The device according to claim 6 wherein the housing (8) has a square radial section with the side between 0.9 and 1.1 cm, and the pairs of notches are perpendicular to the axis (AA).

8. The device according to claim 7, the distal aperture of the body (14) comprising sealed connection means (20).

9. The device according to claim 8, wherein the connection means (20) are an end piece of the DN40 type.

10. The device according to any of preceding claims wherein the proximal end of the body (14) comprises means (16) so that the body (14) forms a sealed enclosure around positioning means (8).

11. The device according to claim 10 comprising an O-ring gasket (16) at the proximal end of the body (14) capable of letting a rod (10) sealably slide through it.

12. The device according to any of preceding claims wherein the body (14) is in metal, for example in stainless steel.

13. The device according to any of claims 1 to 12 wherein the proximal end of the support (2) comprises a threaded portion, and the proximal end of the envelope (4) comprises an aperture facing the threaded portion.

14. The device according to claim 13 further comprising means (10, 12) capable of being screwed to the threaded portion of the support (2) to assist its sliding.

## Patentansprüche

1. Vorrichtung (1) zur Probennahme und zum Sammeln von teilchenförmigen Aerosol- Kontaminationen, die Vorrichtung (1) umfassend einen Probennahme-Träger bzw. - Support (2), der mit Mitteln (8) zum Positionieren wenigstens eines Probennahme-Substrats (6) und einer länglichen Umhüllung (4) versehen ist, in welcher der Probennahme-Träger bzw. -Support entlang der Achse (AA) der Vorrichtung gleitend verschieblich ist zwischen einer ersten oder Probennahme-Stellung, in welcher die Positionierungsmittel (8) sich außerhalb der Umhüllung (4) befinden, und einer zweiten oder Einschließstellung, in welcher der Support bzw. Träger (2) sich im Inneren der Umhüllung (4) befindet und in welcher die Vorrichtung (1) um die Mittel (8) zur Positionierung des Substrats (6) herum abgedichtet ist,
**dadurch gekennzeichnet, dass** der Probennahme-Träger bzw. -Support (2) und die Umhüllung (4) aus Materialien bestehen, die bei der Relativverschiebung gegeneinander nur wenig Abrieb entstehen lassen, derart daß die beispielsweise gemäß der Norm ISO 14644-1 definierten Staubanteile der Außenumgebung, von welcher ausgehend die Probennahme erfolgt, nicht durch eine von der Gleitverschiebung herrührende teilchenförmige Pollution verändert wird, und daß die Vorrichtung einen die Umhüllung (4) umgebenden und mit dieser fest verbundenen Corpus bzw. Körper (14) aufweist, dass das distale Ende des Körpers (14) mit einer den Durchtritt des Trägers bzw. Supports (2) gestattenden Öffnung versehen ist, und daß die Vorrichtung des weiteren einen Spund (18) aufweist, welcher die distale Öffnung des Körpers (14) dicht schließend verschließen kann.

2. Vorrichtung nach Anspruch 1, bei welcher der Probennahme-Träger bzw. -Support (2) und die Umhüllung (4) aus Teflon^{™} bestehen.

3. Vorrichtung nach einem der Ansprüche 1 bis 2, bei welcher der Probennahme-Träger bzw. -Support (2) einen rechteckigen Radialquerschnitt besitzt.

4. Vorrichtung nach einem dee Ansprüche 1 bis 3, bei welcher die Positionierungsmittel wenigstens eine sich längs der Achse (AA) erstreckende durch formgebende Bearbeitung hergestellte Aufnahme-Ausnehmung (8) aufweisen.

5. Vorrichtung nach Anspruch 4, bei welcher die Mittel zur Positionierung wenigstens eine Einkerbung bzw. einen Schlitz in/an einer Innenwandung der Ausnehmung aufweisen.

6. Vorrichtung nach Anspruch 5, bei welcher jede Einkerbung bzw. jeder Schlitz jeweils paarweise doppelt in dem Material des Trägers bzw. Supports (3) vorgesehen ist, derart dass jeweils ein Substrat (6) in das Kerben- bzw. Schlitzpaar so einsetzbar ist, dass das Substart gegenüber der Achse (AA) der Vorrichtung einen Winkel bildet, insbesondere einen Winkel von 90° bis 180°.

7. Vorrichtung nach Anspruch 6, bei welcher die Aufnahme-Ausnehmung (8) einen quadratischen Radialquerschnitt mit einer Seitenlänge zwischen 0,9 und 1,1 cm besitzt und die Paare von Einkerbungen bzw. Schlitzen rechtwinklig zur Achse (AA) sind.

8. Vorrichtung nach Anspruch 7, bei welcher das distale Ende des Körpers (14) Mittel zur dicht schließenden Anschlußverbindung aufweist.

9. Vorrichtung nach Anspruch 8, bei welcher die Anschlußverbindung eine Zwinge vom Typ DN40 ist.

10. Vorrichtung nach einem der vorhergehenden Ansprüche, bei welcher der Körper (14) an seinem proximalen Ende Mittel (16) umfasst, das mit dem Körper (14) eine dichte Einfassung um Positionierungsmittel (8) herum bildet.

11. Vorrichtung nach Anspruch 10, welche eine kreisringförmige Dichtung am proximalen Ende (16) des Körpers (14) aufweist, die eine dicht schließende Gleitverschiebung eines Kolbens (10) durch den Dichtungsring hindurch gestattet.

12. Vorrichtung nach einem der vorhergehenden Ansprüche, bei welcher der Körper (14) aus Metall besteht, beispielsweise aus nicht rostendem Stahl.

13. Vorrichtung nach einem der Ansprüche 1 bis 12, bei welcher der Probennahme- Träger bzw. -Support (2) einen mit Gewinde versehenen Teil aufweist und die Umhüllung (4) an ihrem proximalen Ende eine mit dem Gewindeteil ausgerichtete Öffnung aufweist.

14. Vorrichtung nach Anspruch 13, welche des weiteren Mittel (10, 12) umfasst, die mit dem Gewindeteil des Trägers bzw. Supports (2) verschraubbar sind, zur Unterstützung der Gleitverschiebung.
